# EUROPÄISCHE PATENTANMELDUNG

(11) **EP 1 041 751 A2**
(43) Veröffentlichungstag der Anmeldung: **04.10.2000**
(21) Anmeldenummer: 00440081.8
(22) Anmeldetag: 17.03.2000
(51) Int. Cl.: H04B 10/158

(54) **Empfänger für optisch übertragene Signale**

(30) Priorität: 27.03.1999 DE 19914052
(71) Anmelder: ALCATEL, 75008 Paris (FR)
(72) Erfinder: Bülow, Henning, Dr., 70597 Stuttgart (DE)
(74) Vertreter: Rausch, Gabriele, Dr.

(57) **Zusammenfassung**

Es wird ein Empfänger für den Empfang von optisch übertragenen Signalen vorgeschlagen wobei aus dem gestörten Eingangssignal durch Vergleich mit simulierten Vergleichsbitfolgen das ursprünglich ausgesendete Signal wiederhergestellt wird.

## Beschreibung

Die Erfindung geht aus von einem Empfänger für optisch übertragene Signale nach der Gattung des Hauptanspruchs.

Für den Empfang in optischen Übertragungssystemen die bei Bitraten von derzeit bis zu 40 Gbit/s arbeiten, werden im Empfänger nach der optisch-elektrischen Wandlung elektronische Equalizer eingesetzt, die die empfangenen Signale aufbereiten. Ziel einer solchen elektronischen Aufbereitung der Signale ist es die übertragenen Daten mit einem Minimum an Verlusten zu rekonstruieren, selbst in den Fällen, in denen die Daten durch starke Dispersionseffekte auf der Übertragungsstrecke gestört sind. Aus der Veröffentlichung " Equalization of Bit Distortion Induced by Polarization Mode Dispersion", H. Bülow, NOC '97, Antwerp, ist es bekannt, elektronische Equalizer zur Wiederherstellung der Signale bei starken Störeinflüssen einzusetzen. Dabei werden lineare Equalizer wie sogenannte "tapped delay line equalizer" oder rückgekoppelte Entscheider (DFE decision feedback equalizer) vorgeschlagen. Diese elektronischen Equalizer arbeiten auf der Basis, daß sie die wiederzugewinnenden Daten Bit für Bit aufbereiten. Starke Signalverzerrungen treten auf optischen Strecken auf, die beispielsweise einer Polarisationsmodendispersion, einer chromatischen Dispersion oder Fasernichtlinearitäten unterliegen. Durch die Einflüsse dieser starken Dispersionseffekte wird die Energie eines einzelnen Bits über mehr als eine Bitperiode des Datensignals verteilt. Betrachtet man beispielhaft eine Übertragungstrecke mit einer Polarisationsmodendispersion, die eine Verzögerung der differentiellen Gruppengeschwindigkeiten der unterschiedlichen Polarisationen von Δτ=100 ps hervorruft, so wird ein Datensignal, das mit 10 Gbit/s erzeugt wird und eine Bitperiode von 100 ps aufweist, über einen Zeitbereich von 200 ps verteilt.

Der erfindungsgemäße Empfänger mit den kennzeichnenden Merkmalen des Hauptanspruchs hat gegenüber dem bekannten Stand der Technik den Vorteil, daß das Eingangssignal über mehrere Bitperioden hinweg betrachtet wird und über eine Vergleichsschaltung ein Ähnlichkeitsvergleich durchgeführt wird, der zur definitiven Bestimmung einer einzigen möglichen Bitfolge führt.

Vorteilhafterweise wird dabei die Länge der Bitfolge durch das Störungsverhalten der Übertragungsstrecke bestimmt und festgelegt.

Durch die in den Unteransprüchen aufgeführten Maßnahmen sind vorteilhafte Weiterbildungen und Verbesserungen des im Hauptanspruch angegebenen Empfängers möglich.

Besonders vorteilhaft ist es dabei im Empfänger eine Schaltung zur Detektion der Korrelation, eine Schaltung zur Bewertung des Korrelationsergebnisses und eine Schaltung zur Entscheidung über die richtige Bitsequenz vorzusehen. Dabei ist es von Vorteil, wenn eine Folge von Korrelationsfiltern z.B. in Form der Matched-Filter eingesetzt werden, vorteilhafterweise werden solche Korrelationsfilter in Form von Filterbänken eingesetzt, die auf einfache Weise auch für Bitraten von über 10 Gb/s herstellbar und integrierbar sind. Durch den Einsatz von Filterbänken ist die Länge der Bitsequenz anpaßbar, da lediglich Filter zur bestehenden Filterbank addiert werden müssen.

Eine weitere vorteilhafte Ausführungsform verwendet eine direkte Analog- zu Digitalwandlung über Entscheider und Demultiplexer mit einer anschließenden Auswertung durch einen Prozessor. Ein solches Verfahren der digitalen in einem Prozessor durchgeführten Korrelation wird in Dekodern für Datensignale, die mit "forward-error-correction" (FEC) übertragen werden, bereits eingesetzt. Durch die Verwendung von parallel geschalteten Entscheidern ist eine einfache Anpassung der Entscheiderschwelle durch eine Kontrolleinheit auf die Störungsparameter der Übertragungsstrecke sowie eine Digitalisierung selbst für höchste Datenraten möglich. Der Vorteil des erfindungsgemäßen Empfängers ist es, daß theoretisch, im Fall einer linearen Verzerrung eine hundertprozentige Rekonstruktion des ausgesendeten Signales möglich wird. Weiterhin ist der erfindungsgemäße Empfänger flexibel an die Bedingungen der Übertragungsstrecke anpaßbar. Die elektronischen Komponenten, die zur Durchführung des Verfahrens eingesetzt werden, sind kostengünstig in Schaltungen zu integrieren.

Ausführungsbeispiele der Erfindung sind in den Zeichnungen dargestellt und in der nachfolgenden Beschreibung näher erläutert.

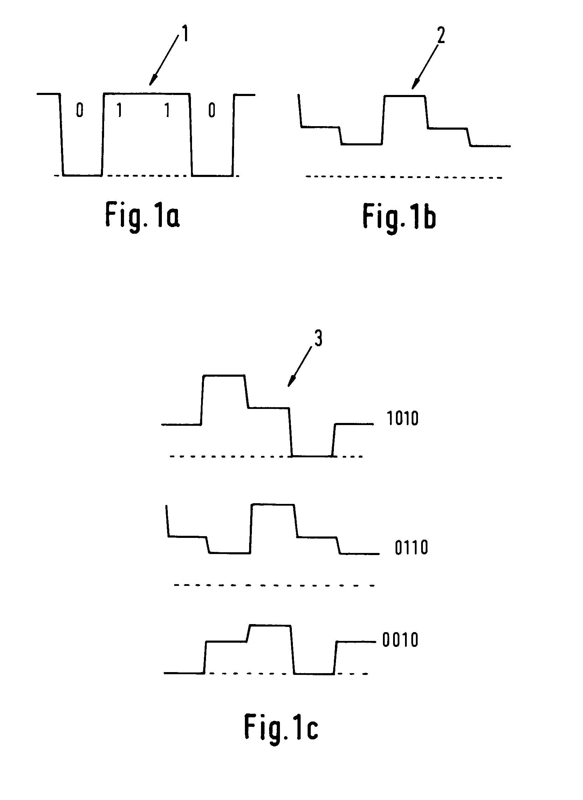

Es zeigt
Figur 1 a unverzerrrte Bitsequenz (Sendesequenz),
Figur 1 b und c verzerrte Empfangssequenzen,
Figur 2 eine Ausführungsform mit einer Filterbank,
Figur 3 eine Ausführungsform mit einer Digitalisierung.

Im Beispiel der Figur 1 wird eine Bitsequenz von vier Datenbits gezeigt. In 1 a ist das ausgesendete Signal 1 mit der Folge 0110 dargestellt. Figur 1 b zeigt das verzerrte Signal 2 nach Durchlaufen der Übertragungsstrecke. Dieses gestörte Signal 2 ist das Eingangssignal, das am optischen Empfänger anliegt. Dieses Signal muß in der elektronischen Schaltung mit möglichen Signalstrukturen verglichen werden, die durch unterschiedliche Bitfolgen unterder Annahme einer bestimmten Verzerrung des Kanals erzeugt werden können. Mit der Kenntnis, welche Störungen auf der Übertragungsstrecke das Signal verzerren, können im Empfänger die gestörten Bitfolgen 3 berechnet werden. Es zeigt sich, daß es eine eindeutige Zuordnung einer bestimmten Bitfolge zu einer bestimmten Signalstruktur gibt. Im Beispielsfall der Figur 1 c weist das Eingangssignal 2 die größte Ähnlichkeit mit der zweiten Signalstruktur auf. Auf Grund der wiedergefundenen Struktur ist die Bitfolge im Empfänger definiert, das ausgesendete Signal wurde wieder hergestellt. Für ein Folge von 4 Bit müssen im Empfänger 2⁴ = 16 mögliche Bitfolgen generiert und mit dem Eingangssignal verglichen werden. Im Empfänger wird dann die Sequenz die die größte Ähnlichkeit mit dem Eingangssignal 2 aufweist definiert und als Ergebnis ausgegeben. Ein Maß zur Bestimmung der Ähnlichkeit der Muster mit der Empfangssequenz wird durch einen Kreuzkorrelation gewonnen. Analog werden bei längeren Bitsequenzen mit k Bit Länge 2^{k} Vergleichsstrukturen erzeugt und verglichen. Dieses Prinzip, welches teilweise schon in der elektrischen Datenübertragung oder der Übertragung über Funkwellen zum Einsatz kommt, hat unter der Bezeichnung "Maximum Likelihood Sequence Detection" Eingang in die Literatur gefunden.

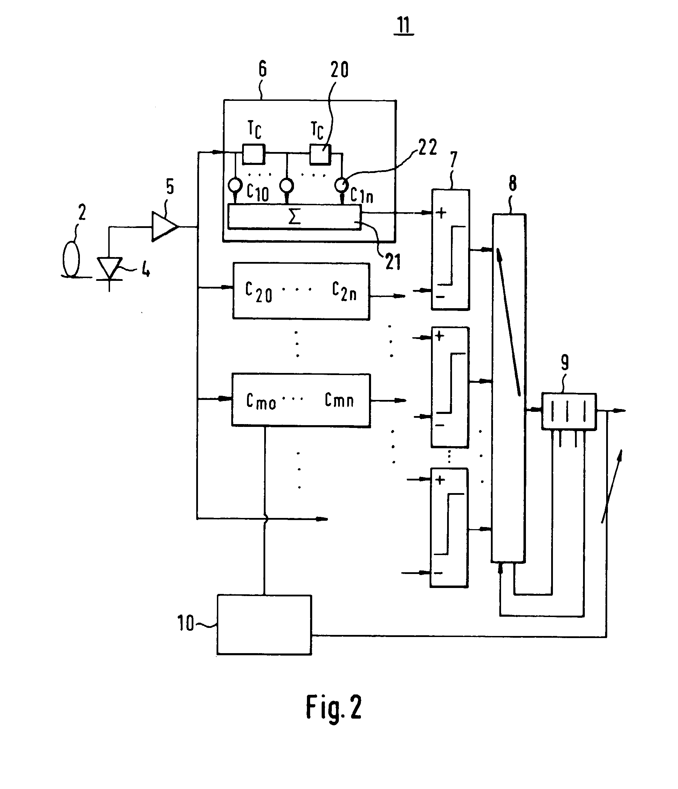

Figur 2 zeigt eine Ausführungsform des erfindungsgemäßen Empfängers mit parallel geschalteten Filtern. Der optische Empfänger 11 ist mit einer Übertragungsstrecke, über die das Eingangssignal 2 den Empfänger erreicht verbunden. Das optische Signal liegt an einem optisch-elektrisch Wandler 4, beispielsweise einer Photodiode an. Der Ausgang der Photodiode ist mit dem Eingang eines Verstärkers 5 verbunden. Der Ausgang des Verstärkers 5 teilt sich parallel auf Korrelationsfilter 6 auf. Die Korrelationsfilter 6 sind als Transversalfilter aufgebaut und beinhalten dabei lineare Verzögerungsglieder 20 sowie ein Summationsglied 21, das mit den Verzögerungsgliedern 20 über Multiplikatoren 22 verbunden ist. Der Ausgang des Summationsglieds 21 liegt am positiven Eingang eines Entscheiders 7 an. Der Ausgang der Entscheider 7 ist mit einem Multiplexer 8 verbunden, dessen Ausgang am Eingang eines Schieberegisters 9 anliegt. Eine Kontrolleinheit 10 weist Verbindungen des Schieberegisters auf. Weiterhin hat die Kontrolleinheit 10 Verbindungen zu den Korrelationsfiltern 6, wobei die Gewichtungsfaktoren Cᵢⱼ gemäß der zu korrelierenden Sequenz i eingestellt werden. Weiterhin stellt die Kontrolleinheit über Verbindungen zu den negativen Eingängen der Entscheider 7 die untere Schwelle für die Schwellwertentscheider ein oder die negativen Eingänge werden mit weiteren Korrelationsfiltern verbunden, deren eingestellte Sequenz z.B. ein komplementäres Bit im Vergleich zur Sequenz des am positiven Eingang anliegenden Filters aufweisen. Die Anzahl der parallelen Korrelationsfilter 6 ist durch die Länge der Bitsequenz definiert. Das gestörte Eingangssignal wird auf die Korrelationsfilter 6 gegeben. Die Korrelationsfilter 6 weisen unterschiedliche Gewichtungsfaktoren Cᵢⱼ auf, so daß jedes Filter eine spezielle Bitfolgesequenz filtert. Paßt das Eingangssignal in die Filterstruktur des Korrelationsfilters liegt am Ausgang des Filters ein Signal an. Dieses Signal schaltet den entsprechenden Entscheider durch Anlegen an den positiven Eingang auf 1, so daß dessen Ausgang ebenfalls eine 1 darstellt. Die parallel geschalteten Entscheider entscheiden über die maximale Korrelation des Eingangssignals mit der jeweiligen Filterstruktur der Korrelationsfilter. Der Multiplexer 8 in Kombination mit dem Schieberegister detektiert die maximale Korrelation am Ausgang eines Entscheiders und führt so zu einer Selektion der Bitsequenz mit der größten Ähnlichkeit. Für die Einstellung der Gewichtungsfaktoren Cᵢⱼ mißt die Kontrolleinheit 10 das wiederhergestellte Signal 1 am Ausgang des Schieberegisters. Dadurch ist eine Anpassung an die aktuelle Störung auf dem optischen Übertragungskanal möglich.

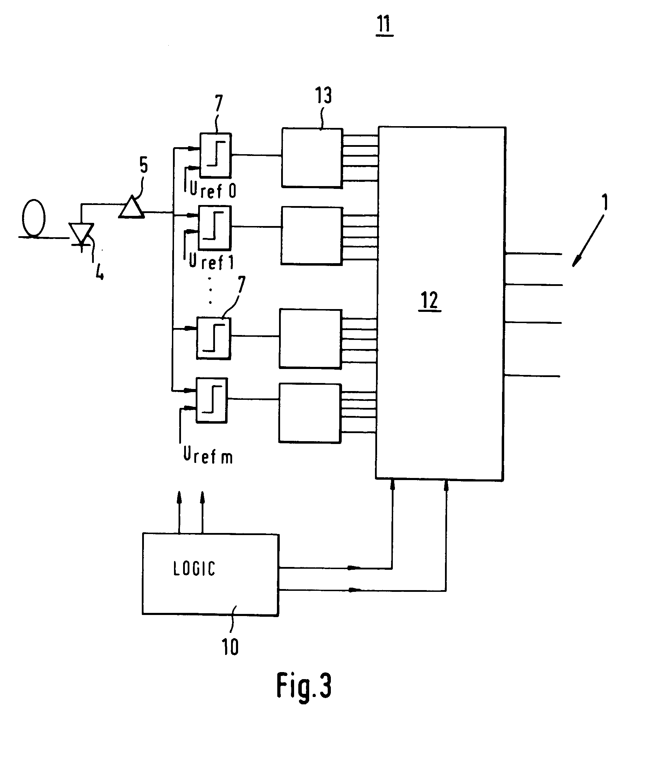

Figur 3 zeigt eine alternative Ausführungsform. Das verstärkte Eingangssignal liegt in dieser Ausführungsform an parallel geschalteten Entscheidern 7 an. Der Referenzeingang der Entscheider 7 ist mit einer Kontrolleinheit 10 verbunden. Dabei werden die Referenzspannungen durch die Kontrolleinheit 10 derart eingestellt, daß mit der gegebenen Anzahl von Entscheidern für die gerade vorliegende Verzerrung des Kanals ein maximaler Abstand zwischen den Abtastwerten der Eingangssequenzen und den Referenzsequenzen vorliegt. Damit wird eine minimale Bitfehlerwahrscheinlichkeit mit minimalem Aufwand (Entscheiderzahl) erzeilt. Der Ausgang der Entscheider 7 liegt am Eingang von parallelen Demultiplexern 13 an, die wiederum parallel zueinander mit einem Prozessor 12 verbunden sind. Die eingehenden Datensequenzen werden über die Entscheider gesammelt und an die Demultiplexer 13 weitergegeben. Deren Einsatz ist notwendig um die Datenrate aus dem Gbit/s-Bereich in einen Bereich von mehreren 100 Mbit/s umzusetzen. Der Prozessor 12, beispielsweise ein CMOS-Prozessor kann Daten von beispielsweise 622 Mbit/s verarbeiten und den notwendigen Vergleich zwischen Eingangsdotensequenz und simulierten Vergleichsdatensequenzen vornehmen. Dabei vergleicht der Prozessor in einer Korrelation das gestörte Datensignal mit verschiedenen simulierten Datensequenzen und errechnet das Minimum der Korrelationsfunktion beispielsweise mit einem Viterbi-Algorithmus.

## Patentansprüche

1. Empfänger (11) für den Empfang von optisch übertragenen Signalen über eine optische Übertragungsstrecke mit einem optisch/elektrischen Wandler (4) und einer elektronischen Filterung, dadurch gekennzeichnet, daß der Empfänger Mittel zum Vergleich eines Eingangssignals (2) der Länge k Bit mit möglichen 2^{k} Signalsequenzen und Mittel zur Entscheidung über die Signalsequenz mit größter Ähnlichkeit hat.

2. Empfänger (11) für den Empfang von optisch übertragenen Signalen über eine optische Übertragungsstrecke mit einem optisch/elektrischen Wandler (4) und einer elektronischen Filterung, dadurch gekennzeichnet, daß das Eingangssignal (2) eine Schaltung zur Detektion der Korrelation zwischen Eingangssignal (2) und simulierten Signal (3), eine Schaltung zur Bewertung des Korrelationsergebnisses und eine Schaltung zur Entscheidung über die richtige Bitsequenz durchläuft.

3. Empfänger (11) nach Anspruch 2, dadurch gekennzeichnet, daß das Eingangssignal der Bitsequenz k Bit auf bis zu 2^{k} Korrelationsfilter (6) aufgeteilt ist, deren Ausgänge mit Entscheidern (7) und einem Multiplexer (8) mit anschließendem Schieberegister (9) verbunden sind.

4. Empfänger nach Anspruch 2, dadurch gekennzeichnet, daß die Wichtungsparameter Cⱼᵢ für die Korrelationsfilter (6) von einer Steuerungseinheit (10) ermittelt werden.

5. Empfänger (11) nach Anspruch 1, dadurch gekennzeichnet, daß das Eingangssignal über Entscheider (7) auf Demultiplexer (13) aufgeteilt ist, deren Ausgänge mit einem Prozessor (12) verbunden sind.

6. Empfänger (11) nach Anspruch 5, dadurch gekennzeichnet, daß die untere Schwelle der Entscheider (7) von einer Kontrolleinheit ermittelt und eingestellt werden.

7. Verfahren zur Wiederherstellung einer Datensequenz in einem Empfänger für optisch übertragenen Signale, wobei eine optisch/elektisch Wandlung erfolgt, dadurch gekennzeichnet, daß die empfangenen Signalsequenz der Länge k Bit mit simulierten 2^{k} Sequenzen verglichen wird und mit einem "Maximum Likelihood"- Vergleich die Sequenz bestimmt und als Ergebnis ausgegeben wird, die die größte Ähnlichkeit mit der empfangenen Sequenz aufweist.

8. Verfahren nach Anspruch 8, dadurch gekennzeichnet, daß die Siganal in einem DST (Dispersion Supported Transmission) Verfahren übertragen werden.
